# EUROPÄISCHE PATENTANMELDUNG

(11) **EP 2 957 356 A2**
(43) Veröffentlichungstag der Anmeldung: **23.12.2015**
(21) Anmeldenummer: 15173209.6
(22) Anmeldetag: 22.06.2015
(51) Int. Cl.: B08B 3/12, B08B 7/00, B29C 33/72

(54) **VERFAHREN UND VORRICHTUNG ZUM ABLÖSEN VON ANHAFTUNGEN AN WERKSTÜCKEN**

(30) Priorität: 20.06.2014 DE 102014108707; 09.02.2015 DE 102015101821
(71) Anmelder: WESTFALEN AG, 48155 Münster (DE)
(72) Erfinder: GOLDSTEIN, Werner, 58456 Witten (DE); VON HOVE, Anja, 61267 Neu-Anspach (DE)
(74) Vertreter: Patentanwälte und Rechtsanwalt Weiß, Arat & Partner mbB

(57) **Zusammenfassung**

Ein Verfahren zum Ablösen von Anhaftungen an Werkstücken soll die folgenden Schritte umfassen:
- die Anhaftungen werden versprödet,
- das Werkstück wird mit zumindest einem Medium in Kontakt gebracht, und
- in das zumindest eine Medium werden Schwingungen, insbesondere Ultraschall-Schwingungen, eingeleitet.

## Beschreibung

Die vorliegende Erfindung betrifft ein Verfahren zum Ablösen von Anhaftungen an Werkstücken sowie Verwendungen und eine Vorrichtung gemäss den unabhängigen Ansprüchen, sowie allgemein ein Verfahren zur Lagerung von verflüssigten Gasen

### STAND DER TECHNIK

Beispielsweise wird Im Spritzgiessverfahren ein Werkstoff zunächst verflüssigt und sodann unter Druck durch Kanäle in einen Formhohlraum eingespritzt, wo er aushärtet. Nach einem Aushärten kann der meist zweiteilige Formhohlraum geöffnet und ein hergestelltes Werkstück entnommen werden.

Als Werkstoff für das Spritzgiessverfahren dienen insbesondere Kunststoffe, wobei Thermoplaste im Vergleich zu Duroplasten und Elastomeren häufiger verarbeitet werden.

Die Reinigung der Komponenten einer Spritzgiessanlage ist oftmals problematisch wenn nicht gar unmöglich. Bei einigen aufwändig zu reinigenden Komponenten von Spritzgiessanlagen, insbesondere bei Spritzgusswerkzeugen, ist es üblich, diese nach Gebrauch nicht zu reinigen, sondern direkt zu entsorgen.

Ist eine Reinigung der entsprechenden Komponente möglich, so ist sie zumeist aufwändig. Zum einen, weil die Maschinenteile, Spritzgiesswerkzeuge und sonstige Bauteile, oft unzugängliche Stellen, Hinterschneidungen oder Kanäle aufweisen, welche schwer zu reinigen sind. Neben der Bauteilgeometrie stellen jedoch auch die zu entfernenden Werkstoffreste selbst oftmals ein Problem dar. Kunststoffe und insbesondere Thermoplaste neigen dazu, sehr stark an den Komponenten der Spritzgiessanlage, wie beispielsweise den Spritzgiesswerkzeugen, anzuhaften. Die durch anhaftenden Werkstoff verunreinigten Komponenten können nicht mehr ordnungsgemäss verwendet werden. Gründe hierfür sind beispielsweise, dass Kanäle, Düsen und ähnliche Engpässe, welche der Werkstoff während eines Spritz-Zyklusses passieren muss, durch anhaftenden Werkstoff verstopft sein können. Weiterhin wirkt sich anhaftender Werkstoff negativ auf die im Spritzgussverfahren zu erzeugenden Werkstücke aus. Wenn nämlich der Werkstoff an den Innenflächen des Formhohlraums anhaftet, führt dies zu unerwünschten Fehlstellen im Werkstück. Der Grund hierfür ist, dass der Formhohlraum als Matrize für das zu erzeugende Werkstück dient.

Gemäss dem Stand der Technik sind zwar zahlreiche Reinigungsverfahren bekannt, um anhaftenden Werkstoff und sonstige Verschmutzungen von Komponenten von Spritzgiessanlagen abzulösen. Diese weisen jedoch in der Regel gewisse Nachteile auf, beispielsweise, weil sie nicht nur anhaftenden Werkstoff ablösen sondern die Komponenten selbst beschädigen können oder, weil sie den anhaftenden Werkstoff oftmals nicht vollständig ablösen.

So sind physikalische oder auch mechanische Reinigungsmethoden, wie beispielsweise Strahlverfahren, geläufig. Hierbei besteht allerdings die Gefahr, die zu reinigenden Komponenten der Spritzgiessanlage zu beschädigen. Hierbei reichen beispielsweise oberflächliche Beschädigungen an den als Matrize dienenden Spritzgiesswerkzeugen aus, um zu einer dauerhaft schlechteren Qualität der mit diesen Werkzeugen hergestellten Werkstücke zu führen. Ferner werden schwer zugängliche Stellen der zu reinigenden Komponenten oftmals mit Strahlverfahren nicht erreicht, so dass zusätzlich zur Beschädigungsgefahr eine nicht optimale Reinigung hinzutritt.

Weiterhin ist bekannt, die Komponenten thermisch durch Erhitzen, beispielsweise durch Pyrolyse, zu reinigen. Auch thermische Verfahren durch Erhitzen haben zum einen den Nachteil, dass sie mit einer Beschädigungsgefahr für die zu reinigenden Komponenten einhergehen und ein vollständiges Entfernen der anhaftenden Werkstoff-Reste nicht immer gewährleistet ist. Hinzukommt, dass thermische Verfahren zur Freisetzung von Dämpfen aus den anhaftenden Werkstoff-Resten oder gar zur Verdampfung der Werkstoff-Reste führen können. Dies stellt eine nicht zu unterschätzende Gefahr für die Gesundheit der mit der Reinigung der Komponenten betrauten Personen dar.

Ferner ist bekannt, die Komponenten der Spritzgiessanlage chemisch zu reinigen. Hierfür wurden eine Vielzahl Reinigungsmittel und Reinigungszusammen-setzungen entwickelt. Während der Einsatz von meist flüssigen Reinigungsmitteln und Reinigungszusammensetzungen in der Regel auch schwer zugängliche Stellen der zu reinigenden Komponenten erreicht, so geht von den verwendeten Chemikalien und Lösungsmitteln in der Regel eine Gesundheitsgefahr aus. Weiterhin sind die Chemikalien und Lösungsmittel oft ausreichend aggressiv, um auch die Komponenten der Spritzgiessanlage und nicht nur die anhaftenden Werkstoff-Reste anzugreifen.

### AUFGABE

Aufgabe der vorliegenden Erfindung ist es, die Nachteile des Standes der Technik zu überwinden. Insbesondere soll ein Verfahren und eine Vorrichtung bereitgestellt werden, mittels denen insbesondere Maschinenteile von Spritzgiessanlagen auf einfache Art und Weise zu reinigen sind.

### LÖSUNG DER AUFGABE

Zur Lösung der Aufgabe führen die Merkmale der unabhängigen Ansprüche.

Die vorliegende Erfindung schlägt ein Verfahren zum Ablösen von Anhaftungen an Werkstücken vor, wobei
- die Anhaftungen versprödet werden,
- das Werkstück mit einem Medium in Kontakt gebracht wird, und
- in das Medium Schwingungen eingeleitet werden.

Gemäss einer bevorzugten Ausführungsform der vorliegenden Erfindung wird zumindest ein Werkstück, wie beispielsweise zumindest ein Spritzgiesswerkzeug, in einem Ultraschallbecken zunächst mit flüssigem Stickstoff in Kontakt gebracht, welcher Anhaftungen, bestehend beispielsweise aus Thermoplasten oder Elastomere (Gummi-Reste), versprödet. Sodann werden Ultraschall-Schwingungen in den flüssigen Stickstoff eingeleitet. Durch das Verspröden und/oder durch die Schallenergie des Ultraschalls entstehen Mikrorisse, und die Anhaftungen werden von dem Werkstück abgelöst. Die Verwendung von flüssigem Stickstoff als Medium zur Reinigung und/oder zur Versprödung hat sich hierbei als besonders vorteilhaft herausgestellt.

Das erfindungsgemässe Verfahren ist zwar besonders zum Ablösen von Anhaftungen an Maschinenbauteilen von Spritzgiessanlagen geeignet, soll jedoch nicht hierauf beschränkt sein. Vielmehr kann das erfindungsgemässe Verfahren überall dort zur Anwendung kommen, wo nach einem Be- oder Verarbeitungsprozess oder nach einem Herstellungsprozess Reste des be- oder verarbeitenden Werkstoffs oder des hergestellten Werkstoffs als Anhaftungen zurückbleiben. Derartige Prozesse sind neben dem Spritzgiessverfahren insbesondere Prozesse, welche in der Kunststoffverarbeitung zur Anwendung kommen, wie beispielsweise Vor- und Aufbereitungsprozesse für Kunststoffe, Press-Verfahren, Blasform-Verfahren, Laminierungs-Verfahren, Beschichtungs-Verfahren, Schäumen und dergleichen. Darüber hinaus kann das erfindungsgemässe Verfahren auch überall dort ausserhalb des Kunststoff-Bereichs angewandt werden, wo zu lösende Anhaftungen zu entfernen sind, welche sich verspröden lassen. Weiterhin kann somit auch an Prozesse aus dem Bereich der Metall- und insbesondere aus dem Bereich der Stahlverarbeitung gedacht sein. Auch Stahl lässt sich verspröden und mit dem erfindungsgemässen Verfahren beispielsweise von Maschinenteilen lösen, an denen er nach einem Prozess unerwünschter Weise anhaftet.

Werkstücke, von denen Anhaftungen entfernt werden sollen, sind im Rahmen der vorliegenden Erfindung beispielsweise sämtliche Teile, Bauteile und dergleichen von Maschinen, welche mit dem als Anhaftung zurückbleibenden Werkstoff in Kontakt standen. Weiterhin können Werkstücke auch Gegenstände sein, welche im Rahmen eines Prozesses hergestellt oder bearbeitet werden und an deren Oberfläche unerwünschte Werkstoffanhaftungen vorhanden sind. Insbesondere sind derartige Werkstücke jedoch Maschinenbauteile, wie Spritzgiesswerkzeuge.

Ein Verspröden erfolgt vorzugsweise durch Temperaturabsenkung. In aller Regel steigt die Sprödigkeit eines Werkstoffs mit sinkender Temperatur. Unter Sprödigkeit wird hierbei die Eigenschaft eines Werkstoffs verstanden, sich unter Krafteinwirkung nicht oder nur in geringem Ausmass zu verformen und stattdessen zu brechen. Hierbei spricht man von einem Sprödbruch.

Abhängig vom Werkstoff sind neben der Temperaturabsenkung zahlreiche weitere Methoden bekannt, um ein Verspröden zu erzielen. Beispielsweise gibt es Metalle, welche durch Kontakt mit Wasserstoff, Schwefelwasserstoff oder flüssigen Metallen, wie flüssigem Gallium, verspröden. Kunststoffe können auch durch Erhitzen oder Alterungsprozesse verspröden, wenn im Kunststoff vorhandene Weichmacher entweichen.

Vorzugsweise erfolgt das Verspröden im Rahmen der vorliegenden Erfindung jedoch durch Temperaturabsenkung, es findet somit eine Kaltversprödung statt. Die meisten Werkstoffe, insbesondere Kunststoffe, wie beispielsweise Thermoplaste, aber auch Metalle, wie beispielsweise Stahl, weisen eine Temperatur auf, unterhalb der sie sprödes Verhalten zeigen. Man spricht hierbei auch von der sogenannten Kältesprödigkeitstemperatur. Die entsprechende Temperatur variiert von Werkstoff zu Werkstoff. Sie liegt beispielsweise im Falle von Stahl bei etwa - 40°C, im Fall von Thermoplasten und Kautschuken im Bereich von etwa - 140°C bis etwa -190°C.

Gemäss einem bevorzugten Ausführungsbeispiel der vorliegenden Erfindung erfolgt die Temperaturabsenkung und somit das Verspröden, indem die Anhaftungen mit einem Medium in Kontakt gebracht werden, welches eine ausreichend tiefe Temperatur aufweist. Flüssiger Stickstoff, welcher bei Normaldruck eine Siedetemperatur von -196°C aufweist, ist somit geeignet, sowohl Anhaftungen bestimmter Metalle, wie beispielsweise Stahl, als auch Anhaftungen aus Kunststoff, wie beispielsweise Thermoplaste oder Kautschuk, zu verspröden. Flüssiger Stickstoff ist hierbei besonders geeignet, da von ihm eine geringe Gesundheitsgefahr ausgeht und seine Siedetemperatur niedrig genug ist, um die meisten Kunststoffe und zahlreiche Metalle zu verspröden. Weiterhin ist er ungiftig und wenig gefährlich sowie durch Verdampfung leicht und ohne Rückstände zu entfernen.

Selbstverständlich kann jedoch im Rahmen der vorliegenden Erfindung auch daran gedacht sein, ein anderes Medium und insbesondere eine andere Kryoflüssigkeit zu verwenden.

Kryoflüssigkeiten im Rahmen der vorliegenden Erfindungen sind Flüssigkeiten, deren Siedepunkt unter -150°C liegt. Letztlich wird die Auswahl des zum Verspröden genutzten Mediums jedoch anhand der Kältesprödigkeitstemperatur(en) desjenigen Werkstoffs bzw. derjenigen Werkstoffe getroffen, aus welchem bzw. aus welchen die Anhaftung besteht.

Neben Stickstoff kann somit auch an flüssigen Wasserstoff, flüssigen Sauerstoff oder flüssige Edelgase, wie Helium oder Neon und dergleichen, gedacht sein. Helium, Neon und Wasserstoff weisen beispielsweise Siedepunkte auf, die unterhalb demjenigen von Stickstoff liegen. Die Verwendung dieser Stoffe in flüssiger Form ist somit geeignet, Anhaftungen bestehend aus Werkstoffen zu verspröden, welche erst bei Temperaturen unter -196°C spröde werden. Hierbei müssen die Handhabbarkeit, die Verfügbarkeit, die Beschaffungskosten und auch die Gefahr des jeweiligen Mediums in Betracht gezogen werden.

Selbstverständlich kann auch daran gedacht sein, flüssigen Stickstoff zu verwenden, welcher auf eine Temperatur unterhalb -196°C abgekühlt ist, um Anhaftungen zu verspröden, welche bei -196°C noch nicht spröde werden.

Flüssiger Sauerstoff kann eine Versprödung oxidationsempfindlicher Werkstoffe auch durch chemische Reaktion und nicht nur durch seine tiefe Temperatur hervorrufen. Er ist jedoch in der Handhabung nicht ungefährlich.

Es kann auch daran gedacht sein, ein Medium im überkritischen Zustand bzw. in der überkritischen Phase zu verwenden. Überkritische Fluide vereinen in vorteilhafter Weise mehrere Eigenschaften von Flüssigkeiten und Gasen, so z.B. das hohe Lösevermögen von Flüssigkeiten mit der niedrigen Viskosität von Gasen. So kann beispielsweise an die Verwendung von überkritischem Kohlenstoffdioxid oder überkritischem Stickstoff gedacht sein.

Weiterhin kann auch daran gedacht sein, Anhaftungen durch Kontakt mit einem gasförmigen Medium zu verspröden. Auch hier ist insbesondere an Gase mit entsprechend tiefer Temperatur gedacht. Es kann weiterhin auch an die Verwendung von Trockeneis gedacht sein. Vorzugsweise wird jedoch ein flüssiges Medium zum Verspröden verwendet.

Da das zum Verspröden benutzte Medium die Temperatur der zu versprödenden Anhaftung absenkt, indem es selbst Wärmeenergie aus der Anhaftung aufnimmt, kann bei der Auswahl des Mediums auch dessen Wärmekapazität in Betracht gezogen werden.

Selbstverständlich kann auch daran gedacht sein, ein Gemisch verschiedener Medien zu verwenden.

Unabhängig von den zu verwendenden Medien bzw. Stoffen kann daran gedacht sein, das Verfahren entweder unter Normaldruck, auf Meeresniveau als bei etwa 101,325 kPa, oder bei anderen Druckverhältnissen durchzuführen. Gemäss einem weiteren Ausführungsbeispiel der vorliegenden Erfindung kann das Verfahren auch unter Druck durchgeführt werden. Da der Siedepunkt eines Stoffes mit steigendem Druck ansteigt, kann das zum Verspröden benutzte Medium nach Druckbeaufschlagung auch bei höheren Temperaturen als Flüssigkeit vorliegen. Für Stickstoff und die meisten anderen als Medium in Frage kommenden Stoffe sind detaillierte Tabellen und Phasendiagramme vorhanden, denen beispielsweise die Siedetemperatur bei gegebenem Druck entnommen werden kann. Somit kann über Druckbeaufschlagung präzise gesteuert werden, ob das Medium als Gas oder Flüssigkeit vorliegt. Die Wahl des passenden Mediums sowie der passenden Parameter wie Druck und Temperatur erfolgt hierbei vorzugsweise hinsichtlich der Beschaffenheit der zu entfernenden Anhaftungen.

Der Wahl der Parameter wie beispielsweise Druck oder Temperatur seien im Rahmen der vorliegenden Erfindung keine Grenzen gesetzt. Beispielsweise kann durch geeignet Wahl des Drucks, unter welchem das Verfahren durchgeführt wird, die Siedetemperatur des Mediums und somit dessen Maximaltemperatur festgelegt werden. Hiervon kann im Rahmen einer Prozessführung Gebrauch gemacht werden. Das Verfahren der vorliegenden Erfindung kann somit unter Über- oder Unterdruck durchgeführt werden. Hierbei können sich die Druckverhältnisse auch im Laufe eines Reinigungszyklusses ändern.

Hierbei kann auch daran gedacht sein, das Medium zwecks Verspröden der Anhaftungen zunächst unter hohem Druck dem Werkstück zuzuleiten und nach erfolgtem Verspröden den Druck derart abzusenken, dass das Medium verdampft und somit rückstandslos, beispielsweise durch Absaugen, entfernt werden kann.

Gemäss einem Ausführungsbeispiel der vorliegenden Erfindung wird nur ein einziges Medium genutzt, welches zugleich dem Verspröden dient und in welches weiterhin die Schwingungen eingeleitet werden. Vorteilhaft an einer derartigen Prozessführung ist, dass das Verfahren einfach gehalten wird und schnell durchführbar ist. Das Verspröden der Anhaftungen und das Ablösen der Anhaftungen durch Einleiten von Schwingungen können im Wesentlichen gleichzeitig erfolgen, wodurch eine Prozessdauer möglichst kurz gehalten wird.

Auch bezüglich der Schwingungen soll der Erfindung keine Grenze gesetzt sein. Es kommen alle Schwingungen in Betracht, mit denen eine versprödete Anhaftung aufgebrochen werden kann. Bevorzugt gehört dazu der Ultraschall.

Hierbei ist hinzuzufügen, dass je nach Beschaffenheit der Anhaftung, deren Ablösen bereits während des Versprödens beginnen kann und durch das Einleiten von Ultraschall-Schwingungen nur noch vervollständigt wird, oder aber das Ablösen nur durch das Einleiten von Ultraschall-Schwingungen bewirkt wird.

Gemäss einem weiteren Ausführungsbeispiel können zumindest zwei Medien zur Anwendung kommen. Beispielsweise werden zunächst mittels eines Mediums, wie beispielsweise flüssigem Stickstoff, oder mittels einer anderen Kryoflüssigkeit oder dergleichen, zu entfernende Anhaftungen versprödet. Danach wird der flüssige Stickstoff, die Kryoflüssigkeit oder dergleichen entfernt und das Werkstück mit einer zweiten Flüssigkeit in Kontakt gebracht, in welche sodann Ultraschall-Schwingungen eingeleitet werden.

Es kann hierbei an eine Vielzahl von Kombinationen mehrerer Medien bzw. Flüssigkeiten gedacht sein. So kann beispielsweise zunächst flüssiges Helium verwendet werden, dessen Temperatur auch das Verspröden von Anhaftungen erlaubt, welche erst bei Temperaturen unterhalb -196°C spröde werden. Sodann kann als zweite Flüssigkeit flüssiger Stickstoff genutzt werden, in welchen Ultraschall-Schwingungen eingeleitet werden. An eine solche Reihenfolge wird insbesondere gedacht werden, wenn verschiedenartige Anhaftungen zu entfernen sind und ein Teil der Anhaftungen von flüssigem Stickstoff nicht zuverlässig versprödet werden kann.

Weiterhin kann daran gedacht sein, die Anhaftungen zunächst mittels flüssigen Stickstoffs oder einer anderen Kryoflüssigkeit zu verspröden und sodann eine Reinigungsflüssigkeit, umfassend Tenside oder aggressivere Chemikalien, zu verwenden, in welche dann Ultraschall-Schwingungen eingeleitet werden. An eine solche Kombination kann insbesondere gedacht sein, wenn verschiedenartige Anhaftungen zu entfernen sind und sich nur ein Teil der Anhaftungen verspröden lässt.

Weiterhin sei angemerkt, dass im vorstehend beschriebenen Ausführungsbeispiel das erste Medium, welches im Wesentlichen dem Verspröden dient, nicht zwingend ein flüssiges Medium sein muss, da für die Einleitung der Schwingungen das zweite Medium bzw. die zweite Flüssigkeit bereitsteht. Somit können an Stelle eines ersten flüssigen Mediums an festes Trockeneis, beispielsweise als Granulat, oder andere ausreichend kalte und insbesondere als Granulat, Pulver oder dergleichen vorliegende Feststoffe zum Zweck der Versprödung gedacht sein. Weiterhin kann auch an gasförmiges Medium gedacht sein.

Eine einfache Ausführungsform einer zur Durchführung des erfindungsgemässen Verfahrens geeigneten Vorrichtung ähnelt im Wesentlichen bekannten Ultraschall-Bädern. Diese umfassen eine Aufnahme, in welche das zu reinigende Werkstück sowie das Medium oder die Medien eingebracht werden. Die Aufnahme umfasst vorzugsweise einen Aufnahmebereich sowie den Aufnahmebereich umgebende Wandungen und beispielsweise Bodenabschnitte und dergleichen.

Weiterhin ist der Aufnahme eine Einrichtung zur Erzeugung und Einleitung von einer Schwingung zugeordnet. Diese umfasst beispielsweise einen Ultraschallschwinger, auch Ultraschallwandler oder Ultraschallgeber genannt, welcher von einem Generator bzw. Ultraschallgenerator mit Energie versorgt wird. Geeignete Ultraschallschwinger sind beispielsweise Rohrschwinger. Rohrschwinger strahlen Ultraschallschwingungen um ihre gesamte Achse ab, was besonders vorteilhaft ist.

Hierbei können Ultraschallwandler beispielsweise an einer geeigneten Stelle an die Aufnahme bzw. das Becken angeflanscht sein. Beispielsweise sind Tauch- und Plattenschwinger geeignet, derart angeflanscht zu werden, dass sie sich im Medium befinden. Rohrschwinger oder auch Stabschwinger können hingegen nahe einer Oberfläche des Mediums angeflanscht werden.

Ultraschallköpfe als Bestandteile des Ultraschallwandlers senden die Ultraschallwellen aus, die der Generator zuvor in Schwingungen umgewandelt hat.

Gemäss einem bevorzugten Ausführungsbeispiel handelt es sich bei der Aufnahme um ein isoliertes Becken. Zur Isolation kann das Becken beispielsweise doppelwandig ausgeführt sein, wobei ein von einer Innen- und einer Aussenwand umschlossener Raum zwecks besserer Isolation im Wesentlichen evakuiert ist. Weiterhin kann auch daran gedacht sein, den Raum zwischen Innen- und Aussenwand mit geeignetem Isolationsmaterial, wie beispielsweise günstig erhältlichem Polystyrolschaumstoff, oder aber mit modernen Isolationsmaterialien, wie Vakuumisolierplatten und dergleichen, zu füllen.

Zumindest ein Ultraschallgenerator und zumindest ein Ultraschallgeber sind vorzugsweise derart in der Aufnahme befestigt, dass sie nicht mit der Kryoflüssigkeit, beispielsweise dem flüssigen Stickstoff, in Kontakt treten. Vorzugsweise sind Ultraschallgenerator und Ultraschallgeber weiterhin isoliert, so dass sie vor aufsteigenden kalten Dämpfen des verdampfenden Mediums geschützt sind. Weiterhin kann auch daran gedacht sein, den Ultraschallgenerator über ein ausreichend langes Kabel mit dem Ultraschallschwinger zu verbinden, so dass nur der Ultraschallschwinger gegen aufsteigende Dämpfe oder gar gegen die Kryoflüssigkeit selbst geschützt werden muss. Der Ultraschallgenerator kann hingegen an einer ausreichend von der Kryoflüssigkeit entfernten Stelle angebracht werden, so dass er nicht weiter geschützt werden muss.

Weiterhin kann auch daran gedacht sein, den Schallgeber derart auszugestalten, dass er in das Medium, beispielsweise den flüssigen Stickstoff, eingetaucht werden kann. Dies erfordert eine geeignete Isolierung des Schallgebers.

Die Frequenz der in die Flüssigkeit eingebrachten Ultraschallschwingungen kann hierbei den Gegebenheiten angepasst werden. Hierbei ist beispielsweise aber nicht ausschliesslich an Frequenzbereiche von 16 kHz bis 4 GHz, bevorzugter 16 kHz bis 1 GHz, noch bevorzugter 16 kHz bis 800 kHz, noch bevorzugter 16 kHz bis 400 kHz, noch bevorzugter 20 kHz bis 400 kHz, noch bevorzugter 20 kHz bis 200 kHz, noch bevorzugter 20 kHz bis 100 kHz gedacht.

Einem weiteren Ausführungsbeispiel nach wird die Aufnahme mit einem Deckel verschlossen, nachdem das zu reinigende Werkstück und das Medium eingebracht wurden. Anschliessend wird der Druck innerhalb der nun mit dem Deckel verschlossenen Aufnahme abgesenkt. Dies kann beispielsweise durch eine Vakuumpumpe geschehen, welche über eine geeignete Leitung mit dem Deckel in Verbindung steht. Hierbei kann eine Absenkung des Drucks den Prozessanforderungen angepasst werden. Es kann an eine Absenkung des Drucks bis hin zu einem Vakuum gedacht sein. Die Absenkung des Drucks führt wiederum zu einem Temperaturabfall des flüssigen Stickstoffs. Dies ist allein schon deshalb sinnvoll, weil sich der flüssige Stickstoff erwärmt, wenn er mit dem zu reinigenden Werkstück in Kontakt tritt.

Gemäss einem weiteren Ausführungsbeispiel verfügt die Aufnahme über insgesamt zumindest drei Wände, zwischen denen ein äusserer und ein innerer Zwischenraum vorhanden sind. Der äussere Zwischenraum dient hierbei wie bereits beschrieben der Isolierung. Der innere Zwischenraum dient der Aufnahme von stark unterkühltem Medium und ist mit einer geeigneten Einrichtung zum Abdecken ausgestattet und verschliessbar, so dass der Druck reguliert werden kann. Beispielsweise wird in diesen inneren Zwischenraum flüssiger Stickstoff eingebracht, welcher eine Temperatur von unter -196°C aufweist. Alternativ kann auch daran gedacht sein, in diesen inneren Zwischenraum flüssiges Neon oder Helium einzubringen, welches ebenfalls eine Temperatur von unter -196°C aufweist.

Gegenüber der vom inneren Zwischenraum umgebenen Aufnahme ist ersterer nicht isoliert, sondern nur durch eine wärmedurchlässige aber stoffundurchlässige Wandung abgetrennt.

Durch diese Anordnung wird erreicht, dass das in der Aufnahme befindliche Medium, beispielsweise flüssiger Stickstoff, durch das im inneren Zwischenraum befindliche Medium abgekühlt wird. Das im inneren Zwischenraum befindliche Medium nimmt hierbei Wärmeenergie des in der Aufnahme befindlichen Mediums auf. Der innere Zwischenraum kann hierbei als Teil eines Kühlsystems ausgestaltet sein, wobei kontinuierlich neues stark unterkühltes Medium in den inneren Zwischenraum eingebracht wird und zugleich aufgewärmtes Medium aus dem inneren Zwischenraum abgeführt wird.

Es kann hierbei im Allgemeinen daran gedacht sein, in den inneren Zwischenraum ein Medium einzubringen, welches eine tiefere Temperatur als das Medium im Aufnahmebereich aufweist. Mit einer derartigen Anordnung sind die Medien im inneren Zwischenraum und im Aufnahmebereich in der Art getrennter Kreisläufe voneinander separiert, wobei der innere Zwischenraum in der Art eines Kühlkreislaufs wirkt. Beispielsweise kann daran gedacht sein, in den inneren Zwischenraum flüssigen Stickstoff einzubringen, welcher eine Temperatur weit unterhalb der Siedetemperatur von -196°C aufweist. Der im inneren Zwischenraum befindliche flüssige Stickstoff ist somit geeignet, den im Aufnahmebereich befindlichen flüssigen Stickstoff stets auf eine Temperatur herunter zu kühlen, welche ebenfalls ausreichend tiefer ist als die Siedetemperatur. Somit wird sichergestellt, dass der im Aufnahmebereich befindliche flüssige Stickstoff auf eine Temperatur gebracht wird, welche ausreichend unterhalb der Siedetemperatur liegt, so dass eine Gasblasenbildung sowie deren negative Auswirkungen auf den Reinigungsprozess vermieden werden.

Es kann aber auch an eine nicht-kontinuierliche Prozessführung gedacht sein, welche einfacher und mit geringeren Kosten zu realisieren ist. Hierbei wird das stark unterkühlte Medium vorzugsweise so lange im inneren Zwischenraum belassen, bis die Temperaturdifferenz zum Medium in der Aufnahme nicht mehr ausreicht, um dieses zu kühlen. Dies kann auf einfache Weise mit geeigneten Temperaturfühlern für tiefe Temperaturen festgestellt werden.

Die Reinigungswirkung von Ultraschall-Schwingungen in Flüssigkeiten wird durch die Anwesenheit von Gasblasen in der Flüssigkeit herabgesetzt. Daher ist es vorteilhaft, die Temperatur des Mediums, in welches die Ultraschall-Schwingungen eingeleitet werden, auf einen Wert unterhalb des Siedepunkts abzusenken. Die Anwesenheit von Gasblasen, welche durch Sieden der Flüssigkeit entstehen und die Energie der entstehenden Kavitationsblasen abfangen, wird somit reduziert.

Folglich können Temperaturkontrolle und gegebenenfalls eine Regulierung der Temperatur beim erfindungsgemässen Verfahren eine Rolle spielen. Die Temperaturkontrolle, also die Messung der Temperatur des Mediums im Aufnahmebereich und gegebenenfalls die Messung der Temperatur des Kühlmediums im inneren Zwischenraum sowie die Feststellung der Temperaturdifferenz, erfolgt über bekannte Fühler, Thermometer und dergleichen, welche für Anwendungen im Bereich tiefer Temperaturen geeignet sind.

Die Einstellung der Temperatur, insbesondere die Absenkung der Temperatur des Mediums in der Aufnahme durch Erhöhung des Durchsatzes der Kühlflüssigkeit im kontinuierlichen Verfahren bzw. Auswechseln der Kühlflüssigkeit im nicht-kontinuierlichen Verfahren, kann manuell oder automatisiert erfolgen. Beispielsweise kann daran gedacht sein, die Temperaturen von Kühlflüssigkeit und Medium in der Aufnahme mittels geeigneter Einrichtungen festzustellen, die Temperaturdifferenz zwischen beiden Messwerten zu ermitteln und bei Unterschreitung einer vorgegebenen minimalen Temperaturdifferenz entweder den Durchsatz der Kühlflüssigkeit zu erhöhen oder diese auszuwechseln.

Hierbei sei angemerkt, dass auch bei Verwendung einer einfachen Ausführungsform der Aufnahme mit nur einer die Aufnahme umgebenden doppelwandigen Isolationsschicht eine automatisierte Detektion und Regulierung der Temperatur erfolgen kann. So kann ein Temperaturfühler feststellen, ob die Temperatur des in der Aufnahme befindlichen Mediums ausreichend unterhalb der Siedetemperatur des Mediums liegt. Ab einem oberen Grenzwert kann die Temperatur des in der Aufnahme befindlichen Mediums, beispielsweise durch Einleiten von frischem tiefkaltem Medium, abgesenkt werden, um die Bildung von Gasblasen durch Sieden zu vermeiden.

Sind der Aufnahmebereich und/oder der innere Zwischenraum mittels eines Deckels verschlossen, so kann ein Temperaturanstieg der Flüssigkeit indirekt auch über einen Druckmesser festgestellt werden, nämlich dann, wenn der Temperaturanstieg zu einer Erwärmung des Mediums auf seine Siedetemperatur führt. Der Volumenanstieg beim Sieden zeigt einem Benutzer an, dass die Temperatur der Flüssigkeit abgesenkt werden muss.

Weiterhin kann neben den vorstehend beschriebenen Ausführungsformen auch an stärker abgewandelte Ausführungsformen der vorliegenden Erfindung gedacht sein. So kann ein Werkstück, welches derart geformt ist, dass es selbst zumindest einen Aufnahmebereich bildet, in welchen ein Medium eingebracht werden kann, auch ohne eine Verwendung eines Beckens nach dem erfindungsgemässen Verfahren gereinigt werden. Ein solcher im Werkstück selbst vorhandener Aufnahmebereich kann beispielsweise ein Kanal, ein Kanalsystem oder schlicht ein von der Oberfläche des Werkstücks gebildeter zumindest teilweise umschlossener Bereich sein, welcher zur Aufnahme eines Mediums geeignet ist.

In diesen Aufnahmebereich können die Verfahrensschritte des erfindungsgemässen Verfahrens durchgeführt werden. So kann der Aufnahmebereich beispielsweise zunächst mit Stickstoff gefüllt werden, um vorhandene Anhaftungen zu verspröden. Sodann kann eine Einrichtung zur Erzeugung und Einleitung von Ultraschall derart dem mit Medium befüllten Aufnahmebereich angenähert werden, dass die Ultraschall-Schwingungen in das Medium eingeleitet werden und die Anhaftungen abgelöst werden.

In sämtlichen beschriebenen Ausführungsformen kann an eine manuelle, automatische oder teil-automatische Detektion und Regulierung verfahrensrelevanter Parameter gedacht sein. Verfahrensrelevante Parameter sind insbesondere Druck und Temperatur und/oder deren Änderungsraten über die Zeit. Die Temperaturdetektion kann hierbei direkt über Thermometer, Messfühler und dergleichen erfolgen, wobei beim Einsatz von Kryoflüssigkeiten zweckmässiger Weise für tiefe Temperaturen geeignete Messinstrumente zum Einsatz kommen. Die Temperaturdetektion kann aber auch indirekt über die Feststellung von Druckänderungen erfolgen. Analoges gilt für den Druck, welcher direkt über geeignete Drucksensoren oder indirekt über die Temperatur ermittelt werden kann.

Eine solche Detektion kann manuell, beispielsweise über Messgeräte, welche ein Benutzer ablesen kann, erfolgen. Weiterhin kann die Detektion auch automatisch über Rechner-gestützte Verfahren erfolgen, wobei beispielsweise ein Protokoll der aufgenommenen Messwerte im zeitlichen Verlauf gespeichert werden kann.

Indem Grenzwerte für Druck und/oder Temperatur und/oder andere Prozessparameter festgelegt werden, kann ein Rechner auch der Regulierung dienen. Beispielsweise kann ein Rechner nach Detektion einer Über- oder Unterschreitung eines Grenzwerts Massnahmen zur Erhöhung oder Absenkung von Druck oder Temperatur treffen. Hierbei kann an Veränderung einer Kühlleistung einer Kühleinrichtung des Mediums, an die Veränderung der Durchflussrate eines Mediums im kontinuierlichen Prozess, an das Öffnen und Schliessen von Ventilen, an das Ansteuern von Pumpen und dergleichen gedacht sein.

Weiterhin kann daran gedacht sein, die vorstehend genannten Massnahmen zur Veränderung der Prozessparameter alternativ oder komplementär auch manuell auszuführen.

Ein weiterer Teil der vorliegenden Erfindung betrifft ein Verfahren zum Lagern eines verflüssigten Gases in einem inneren Raum eines offenen Beckens. Derzeit erfolgt das Einlagern von verflüssigten Gasen (zum Beispiel Stickstoff) in doppelwandigen vakuumisolierten Behältern. Dies ist ein Verfahren, welches in der Regel ausreicht, um in offenen Behältern Material abzukühlen oder kryogen zu lagern (zum Beispiel Blutkonserven, Samen, Gewebeproben usw.).

Hierbei erreicht der flüssige Stickstoff die Temperatur, die es bei einem atmosphärischen Druck von 1000 mbar erreichen kann, in diesem Fall -196 °C, In geschlossenen Behältern entsprechend dem Behälterdruck. Flüssiger Stickstoff hat zum Beispiel bei einem Überdruck von 4000 mbar eine Temperatur von -185,4 °C.

Sollen hier tiefere Temperaturen erzielt werden, als der atmosphärische Druck zulassen würde, muss ein offener Behälter, der zum Beispiel mit flüssigem Stickstoff befüllt ist, mit einem Deckel verschlossen und über eine angeschlossene Vakuumpumpe der Druck im Kopfraum so weit reduziert werden, bis die gewünschte Temperatur erreicht wird. Während dieser Vorgang läuft, kann verdampfter Stickstoff nicht nachgefüllt werden. Dies ist sehr umständlich und wurde in der Vergangenheit nur selten praktiziert.

Entsprechend der vorliegenden Erfindung wird das flüssige Gas erst in den inneren Raum eingegeben und entspannt und anschließend in einen den inneren Raum zumindest teilweise umfangenen Zwischenraum geleitet, der wiederum als Kühlmantel zur Unterkühlung des sich im inneren Raum befindenden flüssigen Gases dient.

Durch diesen Teil der Erfindung ist es möglich, verflüssigtes Gas in einem offenen oder geschlossenen Behälter so zu lagern, dass es durch die gleiche Flüssigkeit, die in den Zwischenraum eingeleitet und unter einem niedrigen Druck gehalten wird, unterkühlt wird. Die Erfindung versetzt in die Lage, ein verflüssigtes Gas in einem offenen Behälter zu lagern und es gleichzeitig mit der gleichen Flüssigkeit zu kühlen. Das Besondere dabei ist die Art, wie die Flüssigkeit erst unter atmosphärischen Druck im offenen Behälter entspannt wird und anschließend über eine Leitung durch Erzeugung eines Unterdruckes in den Zwischenraum geleitet wird, der wiederum als Kühlmantel zur Unterkühlung des zum Beispiel flüssigen Stickstoff im Becken dient.

### Figurenbeschreibung

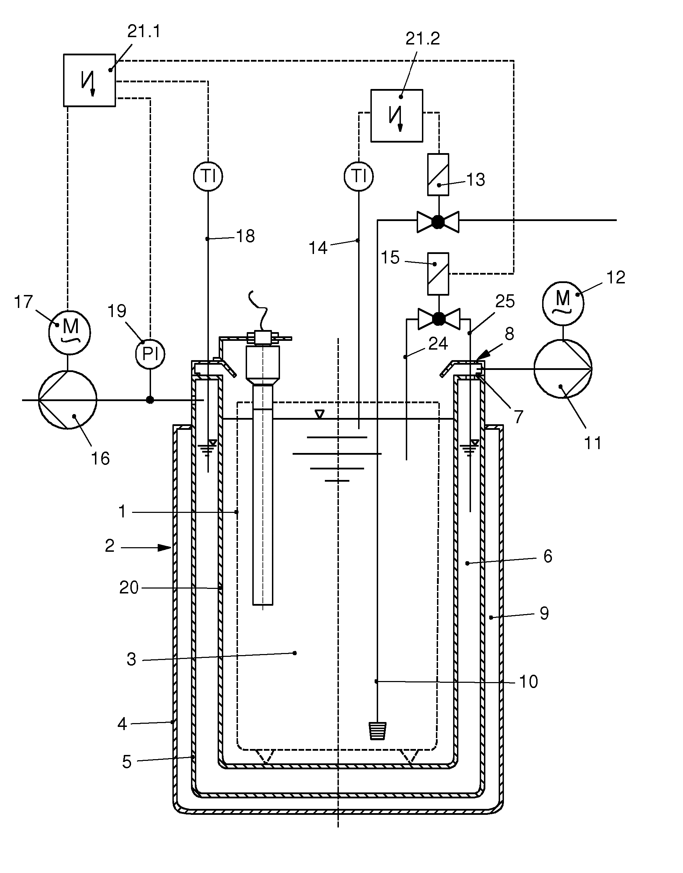

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur eine schematische Darstellung einer erfindungsgemässen Vorrichtung zum Ablösen von Anhaftungen an Werkstücken. Diese Werkstücke werden in eine gestrichelt angedeutete innere Aufnahme 1 eingelegt. Diese innere Aufnahme 1 wird in ein Becken 2 eingesetzt, wobei ein innerer Raum 3 ausgebildet ist. Dieser innere Raum 3 dient der Aufnahme von stark unterkühltem Medium, z.B. von flüssigem Stickstoff, welcher über eine Zuführleitung 10 in das Becken 2 eingegeben wird.

Das Becken 2 wiederum ist dreiwandig ausgebildet, wobei sich zwischen einer Innenwand 20 und einer Zwischenwand 5 ein Zwischenraum 6 ausbildet. Der Zwischenraum 6 dient der Aufnahme eines stark gekühlten Mediums, insbesondere von stark unterkühltem flüssigen Stickstoff für die Kühlung des flüssigen Stickstoff im inneren Raum 3. Ein Zwischenraum 9 zwischen einer Aussenwand 4 und der Zwischenwand 5 ist mit einer Isolierung gefüllt oder evakuiert.

Auf einer oberen Randkante 7, welche den Zwischenraum 6 überdeckt, ist eine ringförmige Absaugeinrichtung 8 montiert. Ein Abgas, welches sich in der Absaugeinrichtung ansammelt, wird mittels eines Abgasgebläse 11, das von einem Motor 12 angetrieben ist, abgesaugt.

Auf der Absaugeinrichtung 8 ist desweiteren ein Rohrschwinger 20 montiert, der in das Becken 2 eintaucht. Dieser Rohrschwinger 20 weist eine entsprechende Verbindung mit einer Stromquelle auf.

Die Funktionsweise der vorliegenden Erfindung ist folgende:
Werkstücke, die behandelt werden sollen, werden in die innere Aufnahme 1 eingelegt und mit dieser in das Becken 2 eingesetzt. Über ein Magnetventil 13, welches über einen Temperaturfühler 14 angesteuert wird, wird flüssiger Stickstoff über die Zuführleitung 10 in das Becken 2 eingeleitet. Sobald der Stickstoff den Temperaturfühler 14 erreicht hat, wird das Ventil 13 geschlossen und ein Ventil 15 geöffnet sowie eine Vakuumpumpe 16 gestartet. Hierdurch sinkt der Druck in dem Zwischenraum 6 und das bereits entspannte und abgekühlte flüssige Gas strömt über Leitungen 24 und 25 in den Zwischenraum 6 ein. Sobald ein Temperaturfühler 18 in dem Zwischenraum 6 kalte Flüssigkeit misst, wird das Ventil 15 geschlossen.

Die Vakuumpumpe 16 wird von einem Motor 17 angetrieben und, sobald ein Drucktransmitter 19 einen bestimmten Druck erfasst, abgeschaltet.

Das Befüllen des Beckens 2, die Zudosierung und das Kühlen des flüssigen Stickstoffs in dem Becken 2 erfolgt vor und während der Ultraschallentschichtung vollkommen automatisch. Entsprechende Steuerungen befinden sich in Schaltschränken 21.1 und 21.2.

**Bezugszeichenliste**

| | | | | | |
|---|---|---|---|---|---|
| 1 | Innere Aufnahme | 34 | | 67 | |
| 2 | Becken | 35 | | 68 | |
| 3 | Innerer Raum | 36 | | 69 | |
| 4 | Aussenwand | 37 | | 70 | |
| 5 | Zwischenwand | 38 | | 71 | |
| 6 | Zwischenraum | 39 | | 72 | |
| 7 | Obere Randkante | 40 | | 73 | |
| 8 | Absaugeinrichtung | 41 | | 74 | |
| 9 | Zwischenraum | 42 | | 75 | |
| 10 | Zuführleitung | 43 | | 76 | |
| 11 | Abgasgebläse | 44 | | 77 | |
| 12 | Motor | 45 | | 78 | |
| 13 | Magnetventil | 46 | | 79 | |
| 14 | Temperaturfühler | 47 | | | |
| 15 | Ventil | 48 | | | |
| 16 | Vakuumpumpe | 49 | | | |
| 17 | Motor | 50 | | | |
| 18 | Temperaturfühler | 51 | | | |
| 19 | Drucktransmitter | 52 | | | |
| 20 | Innenwand | 53 | | | |
| 21 | Schaltschrank | 54 | | | |
| 22 | | 55 | | | |
| 23 | | 56 | | | |
| 24 | Leitung | 57 | | | |
| 25 | Leitung | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Ablösen von Anhaftungen an Werkstücken, wobei
- die Anhaftungen versprödet werden,
- das Werkstück mit zumindest einem Medium in Kontakt gebracht wird, und
- in das zumindest eine Medium Schwingungen, insbesondere Ultraschall-Schwingungen, eingeleitet werden.

2. Verfahren nach Anspruch 1, **dadurch gekennzeichnet, dass** die Anhaftungen durch Kontakt mit einem ersten Medium versprödet werden, wobei das erste Medium eine ausreichend tiefe Temperatur aufweist, um zumindest einen Werkstoff, aus welchem die Anhaftung besteht, zu verspröden, und das Werkstück weiterhin mit einem zweiten Medium in Kontakt gebracht wird, wobei die Schwingungen in das zweite Medium eingeleitet werden.

3. Verfahren nach Anspruch 1, **dadurch gekennzeichnet, dass** die Anhaftungen durch Kontakt mit einem Medium versprödet werden, wobei die Schwingungen in dasselbe Medium eingeleitet werden und dieses Medium eine ausreichend tiefe Temperatur aufweist, um zumindest einen Werkstoff, aus welchem die Anhaftung besteht, zu verspröden.

4. Verfahren nach einem der Ansprüche 2 oder 3, **dadurch gekennzeichnet, dass** das Medium bzw. das erste Medium eine Kryoflüssigkeit, insbesondere flüssiger Stickstoff, ist.

5. Verfahren nach zumindest einem der vorhergehenden Ansprüche, **dadurch gekennzeichnet, dass** das Einleiten von Schwingungen in einem Ultraschallbad durchgeführt wird.

6. Verfahren nach zumindest einem der vorhergehenden Ansprüche, **dadurch gekennzeichnet, dass** zumindest einer der Verfahrensschritte unter Über- oder Unterdruck durchgeführt wird bzw. während des Verfahrens zumindest zeitweise Über- oder Unterdruck herrscht.

7. Verfahren nach zumindest einem der vorhergehenden Ansprüche, **dadurch gekennzeichnet, dass** eine Detektion und/oder eine Regulierung der verfahrensrelevanter Parameter stattfindet.

8. Verwendung einer Kryoflüssigkeit als Reinigungsflüssigkeit in einem Ultraschall-Reinigungsverfahren zum Ablösen von Anhaftungen an Werkstücken.

9. Verwendung einer Kryoflüssigkeit in einem Ultraschall-Reinigungsverfahren zur Versprödung von Anhaftungen an Werkstücken.

10. Verwendung nach Anspruch 9, wobei weiterhin Ultraschall-Schwingungen in die Kryoflüssigkeit eingeleitet werden.

11. Reinigungsvorrichtung zur Durchführung des Verfahrens nach wenigstens einem der Ansprüche 1-7, **dadurch gekennzeichnet, dass** in ein bevorzugt thermisch isoliertes Becken (2) eine Aufnahme (1) für einen zu reinigenden Gegenstand und in das Becken (2) ein Ultraschallschwinger (20) eingesetzt ist.

12. Vorrichtung nach Anspruch 11, **dadurch gekennzeichnet, dass** das Becken (2) von einer Zwischenwand (5) umfangen ist, wobei dazwischen ein Zwischenraum (6) zur Aufnahme eines stark unterkühlten Mediums ausgebildet ist.

13. Vorrichtung nach Anspruch 12, **dadurch gekennzeichnet, dass** die Zwischenwand (5) von einer Außenwand (4) zumindest teilweise umfangen ist, wobei in einem Zwischenraum (9) mit Isoliermaterial gefüllt oder evakuiert ist.

14. Vorrichtung nach wenigstens einem der Ansprüche 11-13, **dadurch gekennzeichnet, dass** dem Becken (2) eine Absaugeinrichtung (8) zugeordnet ist.

15. Vorrichtung nach wenigstens einem der Ansprüche 11 bis 14, **dadurch gekennzeichnet, dass** dem Zwischenraum (6) eine Vakuumpumpe (16) zugeordnet ist.

16. Vorrichtung nach wenigstens einem der Ansprüche 11 bis 15, **dadurch gekennzeichnet, dass** dem Zwischenraum (6) zumindest ein Temperaturfühler (18) zugeordnet ist.

17. Vorrichtung nach wenigstens einem der Ansprüche 11 bis 16, **dadurch gekennzeichnet, dass** der Zwischenraum (6) über Leitungen (24,25) und zumindest ein Ventil (15) mit einem von dem Becken (2) gebildeten Raum (3) in Verbindung steht.

18. Verfahren zum Lagern eines verflüssigten Gases in einem inneren Raum (3) eines offenen Beckens (2), **dadurch gekennzeichnet, dass** das flüssige Gas erst in den inneren Raum (3) eingegeben und entspannt wird und anschließend in einen den inneren Raum (3) zumindest teilweise umfangenen Zwischenraum (6) geleitet wird, der wiederum als Kühlmantel zur Unterkühlung des sich im inneren Raum (3) befindenden flüssigen Gases dient.

19. Verfahren nach Anspruch 18, **dadurch gekennzeichnet, dass** das flüssige Gas unter atmosphärischen Druck in den inneren Raum (3) entspannt wird.

20. Verfahren nach Anspruch 18 oder 19, **dadurch gekennzeichnet, dass** die Leitung des flüssigen Gases in den Zwischenraum (6) durch Erzeugung eines Unterdrucks durchgeführt wird.
